Europäisches Patentamt

European Patent Office

Office européen des brevets

(19)

(11) Veröffentlichungsnummer: **0 088 978**
**B2**

(12) NEUE EUROPÄISCHE PATENTSCHRIFT

(45) Veröffentlichungstag der neuen Patentschrift:
08.08.90

(21) Anmeldenummer: 83102213.2

(22) Anmeldetag: 07.03.83

(51) Int. Cl.⁵: **C 09 D 161/20**, D 21 H 19/26,
D 06 N 7/00, B 05 D 7/26,
B 32 B 31/12, B 30 B 5/06

(54) **Mit Aminoplastharzdispersionen beschichtete Trägermaterialien und deren Weiterverarbeitung zu Schichtstoffen.**

(30) Priorität: 11.03.82 DE 3208728

(43) Veröffentlichungstag der Anmeldung:
21.09.83 Patentblatt 83/38

(45) Bekanntmachung des Hinweises auf die
Patenterteilung:
30.07.86 Patenblatt 86/31

(45) Bekanntmachung des Hinweises auf die
Entscheidung über den Einspruch:
08.08.90 Patentblatt 90/32

(84) Benannte Vertragsstaaten:
AT BE CH DE FR GB IT LI NL SE

(56) Entgegenhaltungen:
EP-A-0 036 176    DE-A-2 722 262
CH-A- 162 213    DE-A-3 015 679
CH-A- 377 102    DE-A-3 114 592
DE-A-1 696 261    DE-B-1 546 451
DE-A-2 248 450    DE-B-1 800 821
DE-A-2 300 680    FR-A-1 280 365
DE-A-2 454 296    FR-A-2 291 011

Die Akte enthält technische Angaben, die nach
dem Eingang der Anmeldung eingereicht
wurden und die nicht in dieser Patentschrift
enthalten sind.

(73) Patentinhaber: CASSELLA Aktiengesellschaft
Hanauer Landstrasse 526
D-6000 Frankfurt am Main 61 (DE)
(73) Patentinhaber: Theodor Hymmen KG
Theodor-Hymmen-Strasse 3
D-4800 Bielefeld 1 (DE)

(72) Erfinder: Dörries, Peter
Hansa-Allee 80
D-6000 Frankfurt/Main (DE)
Erfinder: Wahl, Helmut
Heinrich-Lersch-Strasse 88
D-4000 Düsseldorf 13 (DE)

(74) Vertreter: Urbach, Hans-Georg, Dr.
Hanauer Landstrasse 526
D-6000 Frankfurt am Main 61 (DE)

(56) Entgegenhaltungen:
GB-A- 371 481    US-A-3 959 201
GB-A-1 285 551    US-A-4 195 116
US-A-2 744 047

Kunststoff Handbuch I, 1975, S. 110, 993, 994

Kunststoff Handbuch X, 1968, S. 141, 142,
476-678

Kunststoff Taschenbuch, 1979, S. 126-129

# EP 0 088 978 B2

**Beschreibung**

Die vorliegende Erfindung betrifft Trägerbahnen, insbesondere solche aus Vliesstoffen, wie z.B. Papier oder Geweben oder Gewirken, die mit streichfähigen Aminoplastharzdispersionen beschichtet sind.

Die Erfindung betrifft ferner die Verarbeitung der so beschichteten Trägermaterialien zu oberflächenveredelten Werkstoffen, insbesondere Holzwerkstoffen, oder zu Schichtpreßstoffen, und betrifft somit ein neues besonders ökonomisches Verfahren zur Herstellung derartiger mit schützender und/oder dekorierender Oberfläche veredelter Werkstoffe.

Es ist bekannt, hitzehärtbare Aminoplastharze zur Herstellung von Holzwerkstoffen mit schützenden und/oder dekorativen Oberflächen sowie zur Herstellung von Schichtpreßstoffen einzusetzen. Werkstoffe dieser Art haben in der Technik, insbesondere in der Möbelfabrikation und im Innenausbau eine überaus breite und vielfältige Anwendung gefunden und somit eine sehr erhebliche Bedeutung erlangt.

Bei der Oberflächenveredelung von Holzwerkstoffen wird auf Holzfaseroder Holzspanplatten eine Dekor- bzw. Schutzschicht dadurch aufgebracht, daß dekorative Papier- bzw. Gewebebahnen mit wäßrigen Lösungen geeigneter Aminoplastharze, vorzugsweise Melaminharze, getränkt, auf einen bestimmten Restfeuchtgehalt getrocknet und auf die Platten des Holzwerkstoffs durch Thermohärtung auflaminiert werden. Der Preßdruck kann dabei etwa 10 bis 100 bar (1 bar — $10^5$ Pa — 1 kg/cm$^2$) und die Temperatur etwa 120 bis 180°C betragen. Während des Preßvorgangs härtet der Aminoplast aus und verbindet die Papier- bzw. Gewebebahn mit der Platte des Holzwerstoffs.

In ähnlicher Weise lassen sich Schichtstoffe mit dekorativer bzw. schützender Oberfläche herstellen. Hierbei wird die aminoplastharzgetränkte Dekorbahn nach dem Trocknen auf mehrere Lagen phenolharzimprägnierter Kraftpapiere durch Thermohärtung aufgepreßt. Die Preßdrucke liegen hierbei im Bereich von ca. 50 bis 150 bar und die Preßtemperaturen betragen üblicherweise etwa 120 bis 180°C. Zur Erhöhung der Kratz- und Abriebfestigkeit wird vor dem Verpressen auf die Dekorbahn ein aminoplastharzgetränktes, transparentes sogenantes Overlay-Papier aufgegelt. Zwischen Dekorbahn und Kern Kommt manchmal noch ein Barrierepapier und auf der Rückseite ein Gegenzugpapier zur Anwendung. Für die Tränkung der Overlay- und der Dekorbahn werden vorzugsweise Melamin-Formaldehyd-Harze eingesetzt. Auch bei der Oberflächenveredelung von Holzwerkstoffen können Overlay- und Barrierepapiere zur Anwendung kommen.

Das Verpressen erfolgt anschließend nach verschiedenen allgemein üblichen Methoden. So verpresst man z.B. auf Mehretagenpressen, wobei die Pressung bei 120 bis 160°C im Verlauf von ca. 5 bis 10 Minuten erfolgt und vor der Entnahme der Platten auf Temperaturen von 70 bis 100°C zurückgekühlt wird. Mit diesem Verfahren lassen sich auch unter Einsatz bekannter Harze bereits Oberflächen mit höchstem Glanzgrad herstellen. Nachteilig ist die lange Aufheiz- und Rückkühlungsdauer, die zu langen Preßzyklen führt und das Verfahren verteuert. Beim sogenannten Kurztakverfahren wird jeweils nur eine Etage gepreßt. Die Pressung erfolgt hierbei bei 120 bis 160°C im Verlauf von nur 30 bis 120 Sekunden, und das Produkt wird ohne Rückkühlung de Presse entnommen. Der preßzyklus ist hierbei zwar kurz und kostengünstig, jedoch war es bisher unter Einsatz bekannter Harze nicht möglich, den gleichen hohen Oberflächenglanz zu erzeugen wie beim Mehretagenprozeß mit Rückkühlung.

Ein neues Produktionsverfahren ist die kontinuierliche Herstellung sogenannten Melamin-Endloslaminate auf Doppelbandpressen. Hierbei wird die Dekorbahn zwischen zwei Stahlbändern unter Druck (10 bis 30 bar) und Temperatureinwirkung (130 bis 170°C) auf ein geeignetes Trägermaterial, wie z.B. Vulkanfiber, oder sogenannte Möbelpergamente, aufgepreßt.

Bei der Verarbeitung der Aminoplaste durch Heißpressen erfolgt ein Übergang der löslichen und schmelzbaren Aminoplastvorkondensate in unschmelzbare und unlösliche Produkte. Bei dieser Aushärtung tritt eine Vernetzung ein. Die Geschwindigkeit dieser Vernetzungsreaktion ist jedoch auch bei den erhöhten Verarbeitungstemperaturen für anwendungstechnische Prozesse in der Regel zu gering und muß daher durch Zusätze von sogenannten Härtern beschleunigt werden. Insbesondere ist die Durchführung des Kurztaktprozesses nur in Gegenwart wirksamer Härter in Mengen von etwa 0,05 bis 1% möglich. Als Härter werden sauer reagierende und/oder säureabspaltende Verbindungen verwendet. Derartige Härter sind beispielsweise Ammonium- oder Aminsalze wie z.B. Ammoniumchlorid, Ammoniumrhodanid, Ethanolaminhydrochlorid oder starke organische Säuren wie z.B. p-Toluolsulfonsäure. Bei der Verwendung freier Säuren oder stark sauer reagierender Salze ergeben sich für das Aminoplastharz relativ geringe Topfzeiten, wodurch die Verarbeitung beeinträchtigt wird.

Die zum Tränken der Trägerbahnen eingesetzten Aminoplastharze, häufig auch als Aminoplast-Vorkondensate bezeichnet, sind harzartige Produkte und deren Lösungen, die durch Kondensation von Amino- oder Iminogruppen enthaltenden Verbindungen und Carbonylverbindungen und ggf. einem niederen Alkanol entstehen (Vergl. Kunststoff-Handbuch Bd. X, Duroplaste, C. Hanser Verlag münchen (1968); Houben-Weyl, Methoden der organischen Chemie Bd. XIV/2, S. 357 ff, G. Thieme Verlag Stuffgart (1963)).

Beispiele für bekannte Aminoplastbildner sind Melamin, Harnstoff, Thioharnstoff, Dicyandiamid und Aceto- oder Benzoguanamin. Carbonylverbindungen, die sich bekanntlich für die Umsetzung mit den Aminoplastbildnern eignen, sind aliphatische oder aromatische Aldehyde und Ketone wie. z.B. Formaldehyd, Acetaldehyd, Propionaldehyd, Butyraldehyd, Isobutylaldehyd, Benzaldehyd, Aceton und Methylethyketon. Auch Mischungen verschiedener Aminoplastbildner und verschiedener

2

Carbonylverbindungen können zur Herstellung von Aminoplasten eingesetzt werden.

Besonders vorteilhafte und daher häufig eingesetzte Aminoplastbildner sind Harnstoff und Melamin; die bevorzugte Carbonylverbindung ist der Formaldehyd.

Niedere Alkanole, die bei der Umsetzung von Aminoplastbildnern und den Carbonylverbindungen zugegen sein können, sind solche mit 1 bis 6 C-Atomen; für die Herstellung sogenannter Tränkharze für die Oberflächenveredelung von z.B. Holzwerkstoffen oder Schichtpreßstoffen werden die niederen Vertreter dieser Gruppe, Ethanol und insbesondere Methanol bevorzugt.

Die Reaktion zwischen den Aminoplastbildnern, den Carbonylverbindungen und ggf. dem Alkanol erfolgt in der Regel in einem vorwiegend wäßrigen Medium in einem schwach alkalischen Bereich und wird dabei nur soweit durchgeführt, daß die Produkte noch löslich und schmelzbar bleiben. Sobald dieser Zustand erreicht ist, wird die Kondensation abgebrochen, z.B. durch Abkühlen und Einstellen eines schwach alkalischen pH-Wertes der Reaktionsmischung. Die so hergestellten, nicht auskondensierten Aminoplaste, daher auch Aminoplastvorkondensate genannt, werden in Form ihrer wäßrigen Lösungen, insbesondere als Tränkharze, für die Schichtpreßstoff-Industrie und zur Oberflächenveredelung von Holzwerkstoffen benutzt.

Das wesentlichste Charakteristikum der Aminoplastharze ist das Molverhältnis von Aminoplastbildner und z.B. Formaldehyd sowie der Kondensationsgrad, gekennzeichnet durch die Wasserverdünnbarkeit des Harzes. Moderne handelsübliche für die oben beschriebenen Einsatzzwecke benutzte Harze haben normalerweise Aminoplast/Formaldehyd-Molverhältnisse von 1:1,5 bis 1:22 und Wasserverdünnbarkeiten von 1:0,5 bis 1:20.

Häufig enthalten die technisch eingesetzten Aminoplastharze noch neben dem eigentlichen Amioplast-Vorkondensat sogenannte Modifizierungsmittel, die spezielle Eigenschaften der Harze oder der damit hergestellten Werkstoffe hervorrufen. So können die Harze Zusätze enthalten, die die Topfzeit nach Härterzusatz erhöhen wie z.B. spezielle Amine, oder auch Zusätze, die Glanz und Elastizität erhöhen oder die die Wetterfestigkeit weiter verbessern. Andere bekannte Zusätze beeinflussen das Netzverhalten der Harze oder ihre Fließ- und Härtungscharakteristik.

Bekannte Modifizierungsmittel sind z.B. die bereits erwähnten niederen Alkanole, ferner Glycole und Glycoläther, Sorbit, Zucker, Caprolactam, Methylenbisformamid, Amidosulfonsäure, p-Toluolsulfamid u.a.

Die Aminoplastharze werden entweder als wäßrige Lösungen mit einem Festkörpergehalt von ca. 50—60 Gew.%, sogenannte "Flüssigharze", oder nach dem Sprühtrocknen als wasserfreie, pulverförmige Harze, sogenannte "Pulverharze", in den Handel gebracht.

Pulverförmige Harze wurden insbesondere dann bevorzugt, wenn sie über lange Strecken zum Einsatzort zu transportieren sind oder wenn eine besonders hohe Lagerbeständigkeit gefordert wird.

Die bei allen bekannten Verarbeitungsverfahren der Aminoplastharze erforderliche Imprägnierung der Trägerbahnen erfolgte bisher ausschließlich durch das sogenannte "Tränken" in besonderen, sehr kostspieligen Imprägnieranlagen. Bei Einsatz von pulverförmigen Harzen mußten diese daher zunächst noch in Wasser gelöst werden. Erst die so erhaltenen klaren, relativ niedrig viskosen Lösungen wurden dann für die Imprägnierung verwendet.

Nach der herkömmlichen Imprägnierung enthalten die Trägerbahnen neben dem Harz soviel Wasser, daß eine unmittelbare Weiterverarbeitung nicht möglich ist. Aus diesem Grunde muß zwischen Imprägnieren und Verpressen stets eine Trocknung der imprägnierten Bahnen eingeschaltet werden. Die Trocknung erfolgt in der Regel auf nachgeschalteten Schwebetrocknern und ist wegen der Menge des wegzutrocknenden Wassers und der hohen Verdampfungswärme von Wasser ein sehr energieverzehrender Vorgang. Auch bedingt die erforderliche Trockenzeit eine relativ aufwendige Trockenanlage bzw. eine Limitierung der Produktionsgeschwindigkeit.

Der Energieaufwand bei der Trocknung der imprägnierten Trägerbahnen stellt insbesondere dann eine sehr hohe Belastung des Gesamt-Produktionsprozesses dar, wenn Pulverharze eingesetzt werden müssen, weil hierbei die Verdampfungswärme zweimal aufgewendet werden muß: einmal bei der Sprühtrocknung des Harzes und einemal bei der Trocknung der imprägnierten Trägerbahn. Aber selbst, wenn die Produktion auf der Basis von Flüssigharzen, d.h. den bei der Harzherstellung anfallenden oder nur mäßig aufkonzentrierten wäßrigen Harzlösungen erfolgt, ist die Trocknung der imprägnierten Trägerbahn ein unbequemer und unter Umständen produktionshemmender Schritt. Auch gesamtwirtschaftlich ist diese Trocknung nachteilig, da sowohl aud Gründen der apparativen Konstruktion als auch aus kinetischen und thermodynamischen Gründen das Trocknen der Harze durch Versprühen beim Harzhersteller in der Regel energiegünstiger erfolgt als das Trocknen der beharzten Trägerbahn beim Verarbeiter.

Es wurde nun gefunden, daß es bei der Verarbeitung von Aminoplastharzen zu beschichteten Werkstoffen und Schichtstoffen überraschenderweise möglich ist, das kostspielige Imprägnieren und das energie- und zeitverzehrende Trocknen der imprägnierten Trägerbahnen zu vermeiden, wenn man die Trägerbahnen mit steichfähigen Aminoplastharzdispersionen mit einer scheinbaren Viskosität vo 10000 bis 14000 mPa.s im Scherbereich von 16,5 bis 1,5 sec$^{-1}$, bestehend aus 70 bis 90 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 30 bis 10 Gew.% einer flüssigen Phase beschichtet.

Eine besonders günstige Herstellungsmöglichkeit für die oberflächlich beharzten Trägerbahnen besteht erfindungsgemäß im Auftrag einer streichfähigen Aminoplastharzdispersion eines Pulverharzes

EP 0 088 978 B2

auf die Oberfläche des Trägers, wobei die flüssige Phase der Dispersion noch zusätzlich als Haftermittler dienendes Aminoplastvorkondensat enthält oder enthalten kann.

Die Menge der auf die Trägerbahn aufgebrachten Harzdispersion richtet sich innerhalb bestimmter Bereiche nach dem Flächengewicht des unbeschichteten Trägermaterials, dem sogenannten Rohgewicht. In der Regel werden die Trägerbahnen mit einer Dispersionsmenge beschichtet, die 50 bis 150 Gew.% des Rohgewichts, vorzugsweise 70 bis 140 Gew.% des Rohgewichts, beträgt. Demnach liegen z.B. die aufgetragenen Dispersionsmengen bei einem Flächengewicht der Trägerbahn von 100 g pro m² bei 50 bis 150 g, vorzugsweise 70 bis 140 g pro m².

Die so erhaltenen Bahnen können unmittelbar, d.h. ohne Zwischentrocknung, in üblicher Weise durch Heißpressen weiterverarbeitet werden.

Die vorliegende Erfindung betrifft weiterhin auch ein Verfahren zur Herstellung von beschichteten Werkstoffen, insbesondere Holzwerkstoffen und Schichtpreßstoffen, durch Einsatz der erfindungsgemäß beharzten vlies- oder gewebeartigen Trägerbahnen und anschließendes Aufpressen der Bahnen auf den zu beschichtenden Werkstoff, insbesondere, Holzwerkstoff, oder gemeinsames Verpressen mehrerer beharzter Trägerbahnen, insbesondere Dekor- und Kernbahnen, zu Schichtpreßstoffen unter Einwirkung von erhöhter Temperatur.

Neben der unmittelbaren Weiterverarbeitung der erfindungsgemäßen, oberflächlich mit streichfähigen Aminoplastharzdispersionen beschichteten Trägerbahnen ist es auch möglich, diese auf Vorrat herzustellen und je nach Bedarf an verschiedenen Orten und zu verschiedenen Zeiten weiterzuverarbeiten. Hierbei ist die Zwischenlage von Trennfolien erforderlich.

Die oberflächlich mit streichfähigen Aminoplastharzdispersionen beharzten Bahnen erthalten nur sehr wenig Feuchtigkeit, insbesondere Wasser, so daß bereits kurzes Trocknen an der Luft ohne zusätzliche Wärmezufuhr zu klebfreien Oberflächen und lagerfähigen Produkten führt. Selbstverständlich ist es auch möglich, durch Energiezufuhr die Verdampfung der geringen vorhandenen Wassermenge noch zu beschleunigen. Der Energieaufwand ist in diesem Falle jedoch minimal. Besonders ökonomisch ist jedoch zweifellos die Kombination der oberflächlichen Beharzung de Trägerbahn mit unmittelbar anschließender Weiterverarbeitung durch Verpressen in üblicher Weise, weil hierbei auf eine Zwischentrocknung völlig verzichtet werden kann.

Die Herstellung der oberflächlich mit Aminoplastharz beschichteten Trägerbahnen erfolgt durch Auftrag von streichfähigen Aminoplastharz-Dipersionen auf die Oberfläche der Trägerbahn. Der Harzauftrag kann grundsätzlich auf beiden Seiten der Trägerbahn erfolgen; es ist jedoch vorteilhaft und für die weitere Verarbeitung ohne jeden Nachteil, wenn der Harzauftrag nur auf einer Seite, vorzugsweise der Oberseite, der Trägerbahn erfolgt. Der Auftrag der Harzdispersion kann grundsätzlich in jeder Weise erfolgen, die für den gleichmäßigen Auftrag von streichfähigen Dispersionen auf Flächengebilde bekannt ist. So ist es möglich, die Harzdispersion von Hand aufzubürsten oder aufzuspachteln, zweckmäßigerweise unter Benutzung eines Zahnspachtels. Der bei Produktionsprozessen vorteilhafte maschinelle Auftrag kann beispielsweise im Walzauftragsverfahren mit Drahtrakeidosierung erfolgen.

Die erfindungsgemäß eingesetzten, streichfähigen Aminoplastharz-Dispersionen weisen eine scheinbare Viskosität von 10000 bis 14000 mPa·s im Scherbereich von 16,5 bis 1,5 sec$^{-1}$ auf und bestehen aus 70—90 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 30 bis 10 Gew.% einer flüssigen Phase. Die flüssige Phase ist bevorzugt Wasser.

Vorzugsweise bestehen die streichfähigen Dispersionen aus 75 bis 85 Gew.% Harz und 25 bis 15 Gew.% Wasser. Dementsprechend können zur Herstellung von 100 Gewichtsteilen dieser Dispersionen 70 bis 90 Gewichtsteile, vorzugsweise 75 bis 85 Gewichtsteile, eines pulverförmigen Aminoplastharzes mit 30 bis 10 Gewichtsteilen, vorzugsweise mit 25 bis 15 Gewichtsteilen, der flüssigen Phase, vorzugsweise mit Wasser, homogenisiert werden. Wird als flüssige Phase eine flüssige Aminoplastharz-Lösung (sogenanntes Flüssigharz) eingesetzt, so werden die zu homogenisierenden Mengen von Pulverharz und Flüssigharz so nach dem Harzgehalt des Flüssigharzes berechnet, daß die oben angegebene Zusammensetzung der erfindungsgemäß zu verwendenden Harzdispersion erreicht wird. So können beispielsweise erfindungsgemäße, streichfähige Aminoplastharz-Dispersionen dadurch hergestellt werden, daß man für 100 Gewichtsteile der Dispersion 35 bis 65 Gewichtsteile, vorzugsweise 50 bis 42 Gewichtsteile, Aminoplastharz-Pulver mit 65 bis 35 Gewichtsteilen, vorzugsweise 50 bis 58 Gewichtsteilen, eines waßrigen Aminoplast-Flüssigharzes mit einem Harzgehalt von 50 bis 65 Gewicht% homogenisiert. Der Aminoplastharzgehalt ergibt sich dann additiv aus der Menge Pulverharz und dem im Flüssigkharz enthaltenen Harzanteil.

Bevorzugte streichfähige Aminoplastharz-Dispersionen sind solche, die das Harzpulver in einer Aminoplastharzlösung (Flüssigharz) dispergiert enthalten. Sie sind hochviskose bis pastenförmige homogenisierte Aminoplastharz-Dispersionen. Als Flüssigphase für die Dispersionen können außer Wasser oder wäßriger Aminoplastharzlösung auch andere des Pulverharz lösende oder anlösende Flüssigkeiten wie z.B. Mischungen von Wasser mit niedrigsiedenden wasserlöslichen organischen Lösungsmitteln eingesetzt werden.

Die zweckmäßigste physikalisch makroskopische Beschaffenheit der Dispersion hängt bis zu einem gewissen Grad vom Auftragsversfahren ab. Aufbürsten bzw. Auspachteln der Dispersionen kann mit sehr wenig Flüssigkeit enthaltenden pastösen Dispersionen erfolgen, während bei maschinellem Auftrag durch

4

Walzen und ggf. Rakeln etwas größere Flüssigkeitsanteile enthaltende, zähflüssige Dispersionen vorteilhaft sind.

Als Pulverharze für die Herstellung der erfindungsgemäßen Aminoplastharz-Dispersionen eignen sich fast alle plastifizierten, pulverförmigen, noch nicht ausgehärteten, d.h. noch schmelzbaren Aminoplast-Vorkondensate, und somit praktisch ein Großteil der handelsüblichen Aminoplastharz-Typen, die für die Herstellung von beschichteten Materialien und Schichtpreßstoffen nach dem herkömmlichen Verfahren geeignet sind. Desgleichen können als Flüssigharze bei der Herstellung der erfindungsgemäßen Harzdispersionen handelsübliche Tränkharze eingesetzt werden.

Derartige handelsübliche Pulver- und Flüssigharze weisen in der Regel ein Molverhältnis von Aminoplastbildner zu Formeldehyd von 1:1,5 bis 1:2,2 vorzugsweise 1:1,6 bis 1:1,8, auf und haben Wasserverdünnbarkeiten im Bereich von 1:0,8 bis 1:1,5.

Als Aminoplastharze werden bei der Herstellung der erfindungsgemäß einzusetzenden streichfähigen Harzdispersionen vorwiegend solche auf Basis von Melamin oder Harnstoff als Aminoplastbildner eingesetzt. Auch Mischharze, die als Aminoplastbildner Melamin und Harnstoff enthalten, sind geeignet. Besonders wertvoll und zur Herstellung hochwertiger Endprodukte hervorragend geeignet sind Harze auf Basis reiner Melamin-Formaldehyd-Vorkondensate, die gegebenenfalls noch die bekannten Modifizierungsmittel enthalten können.

Die Homogenisierung der Pulverharze mit der gewünschten flüssigen Phase kann in üblicher Weise, zum Beispiel in Rühr- oder Knet- aggregaten, erfolgen.

Als Trägermaterialien zur Herstellung der erfindungsgemäßen, oberflächlich beharzten Trägerbahnen kommen alle üblichen vliesartigen oder gewebten oder gewirkten flächenförmigen Gebilde in Betracht. Insbesondere können praktisch alle gebräuchlichen einfarbigen und bedruckten Dekorpapierqualitäten mit einem Rohgewicht von 40 bis 200 g/m² sowie handelsübliche Kernlagenpapiere, z.B. Natronkraftpapiere und auch in begrenztem Umfang Overlaypapiere (20—40 g/m²) verarbeitet werden.

Gut geeignet sind auch Papierqualitäten, die bereits bei der Papierherstellung in der Masse weitgehend spaltfest ausgerüstet wurden.

Die Verarbeitung der erfindungsgemäßen, mit einer streichfähigen Aminoplastharz-Dispersion beschichteten Trägerbahnen kann entweder unmittelbar ohne Zwischentrocknung oder nach Lagerung ganz nach den bekannten und üblichen Methoden erfolgen. So verpreßt man z.B. unter druck- und Temperatureinwirkung ein Paket von 2 bis 6 Trägerbahnen kontinuierlich auf Doppelbandpressen zu Schichtpreßstoffen für die dekorative oder technische Anwendung.

Auch kann die Weiterverarbeitung, z.B. als 1- bis 3-lagiges Aufbauschema (Dekor- und Unterlagsfilme) für die Oberflächenbeschichtung von Holzwerkstoffen in Mehretagen- und insbesondere in sogenannten Kurztaktpressen erfolgen. Während des Beschichtungsvorgangs bewirkt der Harzfluß der Aminoplastharzdispersion die Ausbildung einer schützenden Oberfläche sowie eines optimalen Verbundes zu Kernmterial oder Trägerplatte.

Es war hierbei besonders überraschend, daß der Harzfluß in der kurzen Übergangsphase von dem noch schmelzbaren Aminoplast-Vorkondensat zum unschmelzbaren ausgehärteten Duroplast ausreicht, ein vollkommen homogenes, nicht spaltendes Preßerzeugnis zu erhalten.

Ein weiterer unerwarteter Vorteil des Einsatzes erfindungsgemäßer oberflächlich mit streichfähigen Aminoplastharzen beschichteter Trägermaterialien besteht darin, daß die erhaltenen Preßerzeugnisse, insbesondere damit hergestellte Schichtpreßstoffe, eine bei duroplastichen Laminaten nicht bekannte hohe Flexibilität aufweisen. Die erfindungsgemäßen, streichfähigen Aminoplastharzdispersionen selbst können auch als Deckstrich auf nach bekannten Verfahren, z.B. mit Melaminharz, vorimprägnierte, zwischengetrocknete Dekorpapiere mit Rohgewichten von 50—150 g/m² bzw. auf vorimprägniertem Karton mit Rohgewichten von 150—350 g/m², aufgebracht werden.

Die Erfindung wird auch durch den nachfolgenden Stand der Technik nicht nahegelegt:

Aus der CH—A—162 213 ist ein Verfahren zur Herstellung von Deckschichten aus Carbamid-Aldehyd-Kondensationsprodukten auf Materialen aller Art bekannt, wobei Suspensionen von pulverförmigen Carbamid-Aldehyd-Kondensationsprodukten, die beim Eintrocknen eine Kompakte Masse ergeben, auf einer Trager aufgebracht, getrocknet und durch Druck und Wärme gehärtet werden. Wie die Ausführungsbeispiele der CH—A—162 213 zeigen, beträgt dabei die Harzkonzentration in den Suspensionen nur 6,9 bis 54,2 Gew.%, und es kommen in allen Beispielen nur Suspensionen von Harnstoffharzen in Kombination mit weiteren Füll- und Zusatzstoffen, vorzugsweise Zellulose, Thioharnstoff und Pigmenten, zum Einsatz. Vor dem Verpressen muß getrocknet werden, und es werden nur Preßzeiten von 3 Minuten bis 2 Stunden erreicht.

Die US—A—2,744,047 betrifft ein Verfahren zur Herstellung eines verdichteten Schichtstoffes aus Ligno-Zellulose, wobei ein Ligno-Cellulose Vlies, das praktisch frei ist von Feuchtigkeit, mit einer 10- bis 70 gew.%igen wäßrigen Harzlösung oder Harzdispersion so imprägniert wird, daß das imprägnierte Material einen Feuchtigkeitsgehalt von 2 bis 8 Gew.% aufweist. Hieraus ergibt sich unter Berücksichtigung des Konzentrationsspielraumes der Harzlösung ein Harzgehalt des imprägnierten Materials von 0,2 bis 18,6 Gew.%. Das imprägnierte Material wird ohne vorherige Trocknung bei über 100°C unter erhöhtem Druck gepreßt, wobei das Harz aushärtet. In der US—A—2,744,047 wird in Spalte 4, Zeilen 5 bis 9, ausdrücklich betont, daß eine einschränkende Maßnahme des Verfahrens darin besteht, daß die gepreßten Artikel noch unter Druck auf Temperaturen unter dem Siedepunkt des Wassers, also unter 100°C, rückgekühlt werden

EP 0 088 978 B2

müssen. Dieses Verfahren konnte daher keine Hinweise zur Herstellung von aminoplastharzbeschichteten Trägerbahnen nach dem Kurztaktverfahren geben.

Die US—A—3,959,201 betrifft ein Lacksystem, das lösungsmittelarm oder lösungsmittelfrei ist und aus einer Mischung von 20 bis 80 Gew.% eines Hydroxylgruppen enthaltenden organischen Materials mit einem Molekulargewicht von maximal 1 000 und 80 bis 20 Gew.% eines Aminoplastharzes un einem wäßrigen Lösungsmittel mit mindestens 10 Gew.% Wassergehalt besteht. Das System hat einen Festkörpergehalt von mindestens 70 Gew.%. Bei dem hydroxylgruppenhaltigen organischen Material mit einem Molgewicht von unter 1 000 handelt es sich im wesentlichen um Copolymerisate oder Amidgruppen oder Estergruppen enthaltende Polykondensate (Oligomere) mit relativ niedrigem Kondensationsgrad. Die Lacke werden direkt auf die zu veredelnden Oberflächen aufgebracht, vorzugsweise durch die Spritztechnik. Hierbei verdampft zunächst das Lösungsmittel, anschließend erfolgt eine Vernetzung zwischen dem hydroxygruppenhaltigen organischen Material und dem Melaminharz. Sowohl die Zusammensetzung der Lacke als auch deren Applikation unterscheidet sich grundätzlich von dem Verfahren der vorliegenden Erfindung.

Die nachfolgenden Ausführungsbeispiele veranschaulichen die vorliegende Erfindung. Die können selbstverständlich im Rahmen der obigen Offenbarung und nach dem allgemeinen Fachwissen variiert werden.

### Beispiel 1

a) Aus 80 Teilen eines modifizierten handelsüblichen Melaminformaldehyd-Kurztaktharzes in Pulverform (Molverhältnis Melamin:Formaldehyd = 1:1,8) und 20 Teilen entsalztem Wasser wurde am Schnellrührer eine Klumpenfreie Harzdispersion hergestellt. Viskosität bei 23°C: ca. 12 000 bis 14,000 mPa·s. Zu dieser Dispersion wurden noch 0,7% Morpholinsalz der para-Toluolsulfonsäure als Härter und 0,5% eines handelsüblichen Netzmittels gegeben.

Die Topfzeit der Dispersion beträgt bei 20 bis 25°C: ca. 8 bis 10 Stunden. Im Walzauftragsverfahren mit Drahtrakeldosierung (100 bzw. 150 µ) wurde obenbeschriebener Ansatz auf die Oberseite nachstehender am Markt gängiger Dekorpapiersorten aufgebracht:

a) Dekorpapier-Holzmaserdruck-Sapeli

| | |
|---|---|
| Rohgewicht | : 65 g/m² |
| Endgewicht mit Dispersion | : 140 g/m² |

b) Dekorpapier-weiß

| | |
|---|---|
| Rohgewicht | : 80 g/m² |
| Endgewicht mit Dispersion | : 170 g/m² |

c) Dekorpapier-bedruckt-grau Leinen-Muster

| | |
|---|---|
| Rohgewicht | : 120 g/m² |
| Endgewicht mit Dispersion | : 250 g/m² |

d) Baumwollgewebe

| | |
|---|---|
| Rohgewicht | : 200 g/m² |
| Endgewicht mit Dispersion | : 440 g/m² |

e) Kerniagenpapier, bereits spaltfest bei der Papierherstellung ausgerüstet

| | |
|---|---|
| Rohgewicht | : 190 /g/m² |
| Endgewicht mit | |
| Harzdispersionsstrich | : 350 g/m² |

f) Regeneratpapier

| | |
|---|---|
| Rohgewicht | : 140 g/m² (Verwendung als Unterlagsfilm) |
| Endgewicht mit | |
| Harzdispersionsstrich | : 290 g/m² |

b) Die Verpressung der einzelnen Papierlagen erfolgte sofort nach dem Dispersionsautrag ohne Zwischentrocknung.

EP 0 088 978 B2

b1) Aufbauschema für Schichtstoffherstellung:

Preßblech, seidenglanz oder Aluminiumfolie oder Strukturpapier
Dekorpapier bzw. Gewebe (Qualität a-d), beharzte Seite nach
oben
Regeneratpapier (Qualität f)
Kernlagenpapier (Qualität c)
Preßblech
Preßbedingungen: 25 bis 35 sec. bei 155—150°C gemessen am Dekorpapier bei einem Preßdruck von
25—30 bar.

Befund

Es wurden blasenfreie, spaltfeste Laminate mit homogener, geschlossener Oberfläche erhalten.
Die Prüfung der Aushärtung nach dem Kitonanfärbetest lag mit Stufe 2 im üblichen Bereich. Die
Prüfung auf Verhalten gegenüber Wasserdampf und die Prüfung der Rißbeständigkeit, beide nach
Vorschrift DIN 53799 bzw. DIN 68765, entsprachen den Anforderungen.

b2) Aufbauschema für die Schichtstoffherstellung mit Vulkanfiber- bzw. Möbelpergament als Kernlage:

Strukturpapier oder Aluminiumfolie
Dekorpapier bzw. Gewebe (Qualität a-d), beharzte Seite zum Strukturpapier

Vulkanfiber oder Möbelpergament
Regeneratpapier (Qualität f), beharzte Seite zur Vulkanfiber

Verarbeitungsbedingungen in einer Doppelbandpresse:
Verweilzeit unter Druck- und Temperatureinwirkung ca. 20 s, entsprechend einer Laufgeschwindigkeit
von 6 m/min. Die Temperatur an beiden Preßbändern lag bei 160—165°C. Preßdruck: 12—15 bar.

Befund

Es wurden blasenfreie, spaltfeste Laminate mit homogener geschlossener Oberfläche erhalten.
Die Prüfung der Aushärtung nach dem Kintonanfärbetest lag mit Stufe 2 im üblichen Bereich.
Die Prüfung auf Verhalten gegenüber Wasserdampf und die Prüfung der Rißbeständigkeit, beide nach
Vorschrift DIN 53799, entsprechen den Anforderungen.
Es ist bemerkenswert, daß sich sowohl die erfindungsgemäß hergestellten Schichtstoffe gemäß
Beispiel 1 — Punkt b1) als auch die erfindungsgemäß hergestellten Schichtstoffe gemäß Beispiel 1 — Punkt
b2) durch eine sonst für duroplastische Laminate nicht bekannte hohe Flexibilität auszeichnen.

b3) Aufbauschema für die Beschichtung von Spanplatten

Release-Papier (Strukturfilm)
Dekorpapiere (a-c), beharzte Seite zum Strukturfilm
Regeneratpapier (f), beharzte Seite zur Spanplatte
Spanplatte
Dekorpapiere (a-c), beharzte Seite zum Strukturfilm
Release-Papier (Strukturfilm)

Preßbedingungen: 48 sec. bei 160°C, gemessen am Dekorpapier Preßdruck: 25 bar

Befund

Es wurden beschichtete Spanplatten mit homogener geschlossener Oberfläche mit gutem Verbund zur
Spanplatte erhalten. Die Aushärtungsprüfung nach dem Kiton-Test lag mit Stufe 2 im üblichen Bereich. Die
Prüfung auf Verhalten gegenüber Wasserdampf sowie die Rißbeständigkeitsprüfung, beides nach DIN
53799 bzw. DIN 68765, entsprach den Anforderungen.

Vergleich

Es wurden Schichtstoffe nach den angegebenen Aufbauschermen hergestellt, wobei die einzelnen
Papiere jedoch in bekannter Weise nach dem Stand der Technik aus einer 55 %igen, wäßrigen
Melamintränkharzlösung unter Zusatz von Härtungsbeschleuniger und Netzmittel durchimprägniert und
anschließend auf eine Restefeuchte von 6,5% (5 Minuten bei 160°C nachgetrocknet) getrocknet wurden.
Die Verpressung erfolgte ebenfalls gemäß den vorstehend angegebenen Bedingungen.

Befund

In den anwendungstechnischen Eigenschaften (Kiton-Test, Dampftest, Rißbeständigkeitstest) konnten zwischen den erfindungsgemäß hergestellten Schichtstoffen aus mit streichfähiger Harzdispersion behandelten Trägerbahnen und den nach herkömmlichen Verfahren mit durchimprägnierten und getrockneten Trägerbahnen gefertigten Laminaten keine Unterschiede festgestellt werden.

Beispiel 2

Aus 85 Teilen eines 15% Harnstoff enthaltenen, modifizierten Melaminformaldehydharzes in Pulverform (Molverhältnis Aminoplastbildner: Formaldehyd = 1:1,8) und 15 Gewichtsteilen entsalztem Wasser wurde am Schnellrührer ein klumpenfreie Harzdispersion hergestellt. Viskosität bei 23°C: ca. 12 000—14 000 cp. Zu dieser Dispersion wurden noch 0,7% Morpholinsalz der para-Toluolsulfonsäure als Härter und 0,5% eines handelsüblichen Netzmittels gegeben.

Die Topfzeit der Dispersion beträgt bei 20—25°C: 8—10 Stunden. Im Walzauftragsverfahren mit Drahtrakeldosierung (100 bzw. 150 µ) wurde obenbeschriebener Ansatz aud die Oberseite nachstehender am Markt gängiger Dekorpapiersorten aufgebracht:

e) Kernlagenpapier, bereits spaltfest bei der Papierherstellung ausgerüstet

|  | |
|---|---|
| Rohgewicht | : 190 g/m² |
| Endgewicht mit Harzdispersionsstrich | : 350 g/m² |

f) Regeneratpapier

|  | |
|---|---|
| Rohgewicht | : 140 g/m² (Verwendung als Unterlagsfilm) |
| Endgewicht mit Harzdispersionsstrich | : 290 g/m² |

Die Verpressun der beharzten Papiere erfolgte ohne Zwischentrocknung gemeinsam mit einem gemäß Beispiel 1 beharzten nicht getrockneten Dekorpapier (Qualität a-c) gemäß folgendem Aufbauschema Preßblech, seidenglanz oder Aluminiumfolie ode Strukturpapier Dekorpapier bzw. Gewebe (Qualität a-d), beharzte Seite nach oben

Regeneratpapier (Qualität f)
Kernlagenpapier (Qualität e)
Preßblech

Preßbedingungen: 25 bis 35 sec. bei 155—250°C, gemessen am Dekorpapier bei einem Preßdruck von 25—30 bar.

Befund

Es wurden blasenfreie, spaltfeste Laminate mit homogener, geschlossener Oberfläche erhalten. Die Prüfung der Aushärtung nach dem Kitonanfärbetest lag mit Stufe 2 im üblichen Bereich. Die Prüfung auf Verhalten gegenüber Wasserdampf und die Prüfung der Rißbeständigkeit, beide nach Vorschrift DIN 53799 bzw. DIN 68765, entsprachen den Anforderungen.

Beispiel 3

Aus 55 Gewichtsteilen eines modifizierten handelsüblichen Melaminformaldehyd-Kurztaktharzes (Molverhältnis Melamin: Formaldehyd = 1:2,0) in Pulverform und 45 Gewichtsteilen eines handelsüblichen, als 57 %ige wäßrige Lösung vorliegenden modifizierten Melaminformaldehyde-Flüssigharzes (Molverhältnis Melamin: Formaldehyd = 1:1,75) wurde am Schnellrührer eine Klumpenfreie Harzdispersion hergestellt.

Zu diese Dispersion wurden noch 0,8% Morpholinsalz der para-Toluolsulfonsäure als Härter und 0,5% eines handelsüblichen Netzmittels gegeben.

Der Einsatz der Dispersion zum Auftrag auf die Trägerbahnen, deren Weiterverarbeitung zu Schichtstoffen bzw. beschichteten Spanplatten erfolgte gemäß Beispiel 1, Abschnitte b1), b2) und b3).

Die erhaltenen Preßprodukte waren blasenfrei und spaltfest und zeigten eine homogene geschlossene Oberfläche. Die Aushärtungsprüfung nach dem Kitontest ergab die Stufe 2 und lag damit im üblichen Bereich. Das Verhalten gegen Wasserdampf sowie die Rißbeständigkeit entsprachen den Forderungen gemäß DIN 53799 bzw. DIN 68765.

Beispiel 4

Aus 55 Gewichtsteilen eines modifizierten handelsüblichen Melaminformaldehyd-Kurztaktharzes (Molverhältnis Melamin: Formaldehyd 1:1,8) in Pulverform und 45 Gewichtsteilen eines handelsüblichen, als 57 %ige wäßrige Lösung vorliegenden modifizierten Melaminformaldehyd-Flüssigharzes

8

(Molverhältnis Melamin: Formaldehyd 1:1,7) wurde am Schnellruhrer eine klumpenfreie Harzdispersion hergestellt.

Zu dieser Dispersion wurden noch 0,8% Morpholinsalz der para-Toluolsulfonsäure als Härter und 0,5% eines handelsüblichen Netzmittels gegeben.

Der Einsatz der Dispersion erfolgte auf die Oberfläche eines nach bekanntem Verfahren mit einem handelsüblichen modifizierten Melamintränkharz (Molverhältnis Melamin:Formaldehyd 1:1,7) vorimprägnierten und zwischengetrockneten weißen Dekorpapier (Rohgewicht: ca. 80 g/m²). Gewicht nach Vorimprägnierung und Zwischentrocknung: ca. 150 g/m².

Gewicht nach Vorimprägnierung, Zwischentrocknung und Dispersionsauftrag: ca. 200 g/m².

Die Weiterverarbeitung zu Schichtstoffen bzw. beschichteten Spanplatten erfolgte gemäß Beispiel 1, Abschnitt b1), b2) und b3).

Befund

Die hierbei erhaltenen Schichtstoffe bzw. beschichteten Spanplatten entsprachen den Produkten des Beispiels 1, sie zeigten blasenfreie, homogene geschlossene Oberflächen mit Aushärtungsstufe 2. Die Beständigkeit gegen Wasserdampf, die Rißbeständigkeit und der Verbund im Werkstoff (Spaltfestigkeit) entsprachen den Anforderungen.

Beispiel 5

Aus 80 Teilen eines modifizierten handelsüblichen Melaminformaldehyd-Kurztaktharzes in Pulverform (Molverhältnis Melamin: Formaldehyd = 1:1,8) und 20 Teilen entsalztem Wasser wurde am Schnellrührer eine klumpenfreie Harzdispersion hergestellt. Viskosität bei 23°C: ca. 12 000—14 000 mPa·s. Zu dieser Dispersion wurden noch 0,7% Morpholinsalz der para-Toluolsulfonsäure als Härter und 0,5% eines handelsüblichen Netzmittels gegeben.

Die Topfzeit der Dispersion beträgt bei 20—25°C: ca. 8—10 Stunden. Im Walzauftragsverfahren mit Drahtrakeldosierung (100 bzw. 150 µ) wurde oben beschriebener Ansatz auf die Oberseite eines weißen Kantenkartons aufgetragen. Dieser wurde zuvor in an sich bekannter Weise mit einer Mischung aus gleichen Teilen einer Acrylatdispersion und einem Harnstofftränkharz grundimpräniert und vorgtrocknet.

Rohgewicht des Kartons: 210 g/m²
Gewicht nach der Vorimprägnierung und Zwischentrocknung: 300 g/m²
Gesamtgewicht mit Dispersions-Oberflächenstrich: 380 g/m²
Die Aushärtung des einlagigen Kartons erfolgte in einer Doppelbandpresse unter Bedingungen, wie sie unter Beispiel 1 — Teil b2) beschrieben sind.

Befund

Es wurde ein spaltfestes, flexibles Material mit geschlossener, homogener Oberfläche hergestellt. Die Prüfung der Aushärtung nach dem Kiton-Anfärbetest lag mit Stufe 2 im üblichen Bereich. Ein derartiges Produkt kann u. a. für die Beschichtung von Kantenfächen weiterverarbeitet werden.

Durch die erfindungsgemäße Verwendung von streichfähigen (relativ geringe Feuchtigkeit) Aminoplastharzdispersionen läßt sich in der Praxis eine verhältnismäßig wenig Raum einnehmende Vorrichtung zum Herstellen der Laminate o. dg. verwenden, bei der vor dem Endverpressen eine energie- und zeitverzehrende Trocknung mit aufwendigen Trockenvorrichtungen wie langen Trockenkanälen vermieden wird. Eine Anlage zur Ausführung der Erfindung, d. h. zur Herstellung von Preßerzeugnissen unter Einsatz der erfindungsgemäßen aminoplastharzbeschichteten Trägerbahnen braucht daher keine Einrichtung zur Trocknung der beharzten Trägerbahnen aufzuweisen. Eine solche Anlage besteht somit im wesentlichen nur aus drei Elementen, nämlich

a) einer Einrichtung zur Entnahme von Trägerbahnen, Dekorfolien und Basismaterial
b) einer Beschichtungsstation und
c) einer Presse.
Alle drei Aggregate können im Prinzip in an sich bekannter Weise aufgebaut sein.

Auf der Zeichnung ist ein Ausführungsbeispiel einer Vorrichtung zum kontinuierlichen Herstellen einer aminoplastharzbeschichteten Trägerbahn dargestellt und näher beschrieben. Es zeigen:

Figur 1 eine schematische Seitenansicht der Gesamtvorrichtung;
Figur 2 einen senkrechten Schnitt durch Druckkammern der Preßbandvorrichtung;
Figur 3 einen senkrechten Schnitt durch dieselbe Druckkammer mit Absperrvorrichtung nach Fig. 2 in entlasteter Stellung;
Figur 4 einen senkrechten Schnitt durch dieselbe Druckkammer gemäß Fig. 2 in beaufschlagter Stellung;
Figur 5 einen senkrechten Schnitt durch dieselbe mit abgeänderter Absperrvorrichtung in entlasteter Stellung.

Mit 10 ist eine Abwickelstation für zwei unbeschichtete Trägerbahnen 11, 12 bezeichnet, die eine obere Vorratsrolle 13 mit Reserverolle 14 und eine untere Vorratsrolle 15 it Reserverrolle 16 aufweisen. Die sich abwickelnden Trägerbahnen 11, 12 durchlaufen übereinanderliegend parallel übereinander drehbare gelagerte Druckrollen (Einzugsrollen) 17 und 18, von denen vorzugsweise eine Druckrolle angetrieben wird, so daß auf die Trägerbahnen ein Zug ausgeübt wird, der diese Trägerbahnen von den entsprechenden Vorratsrollen abzieht.

Dieser Abwickelstation ist eine Beschichtungseinrichtung 19 mit den Übertragungswalzen 20 und 21 nachgeschaltet, welche auf entgegengesetzten Flächen der Trägerbahnen die erfindungsgemäße streichfähige Aminoplastharzdispersion aufträgt, die kurzzeitig in Vorratsbehältern 23 und 24 aufbewahrt wird.

Dieser Beschichtungseinrichtung folgt in gewissem kurzem Abstand einerseits (obenseitig) eine Abwickeleinrichtung 25 mit entsprechenden Vorrats- und Reserverollen 26, 27, von denen ein Strukturfilm 28 gemäß der Erfindung, und andererseits (untenseitig) eine gleichartige Abwickeleinrichtung 29 mit entsprechender Vorrats- und Reserverolle 30, 31 F von denen eine Foli wie Vulkanfiberfolie 28a abgezogen werden und mittels weiterer Druckwalzen (Einzugswalzen) 34, 35 auf die noch flüssige erfindungsgemäße Aminoplastharzdispersion aufgedrückt werden.

Zum Verpressen der so beschichteten Trägerbahnen unter erhöhter bzw. höherer Temperatur ist eine Preßvorrichtung 36 (Doppelbandpresse) mit zwei endlos umlaufenden, sich gegenüberliegenden Preßbändern 37, 38 unmittelbar nachgeschaltet, die um Umlenkrollen 37a, 38a geführt einen speziellen, spezifisch hohen Flächendruck auf die durchlaufenden mehrfach beschichteten Trägerbahnen 11, 12 G sowie den Strukturfilm 28 und die Basisfolie 28a ausüben und diese miteinander zu einem Laminat verpressen.

Um einen besonders gleichmäßigen Flächendruck zu gewährleisten und Luftverlust zu vermeiden, sind auf der Rückseite jedes Preßbandes 37, 38 an einer gemeinsamen Druckplatte 41 eine Vielzahl von Druckkammern 46, 47 befestigt, mit jeweils einer äußeren Fassung 39 und einer inneren Fassung 40.

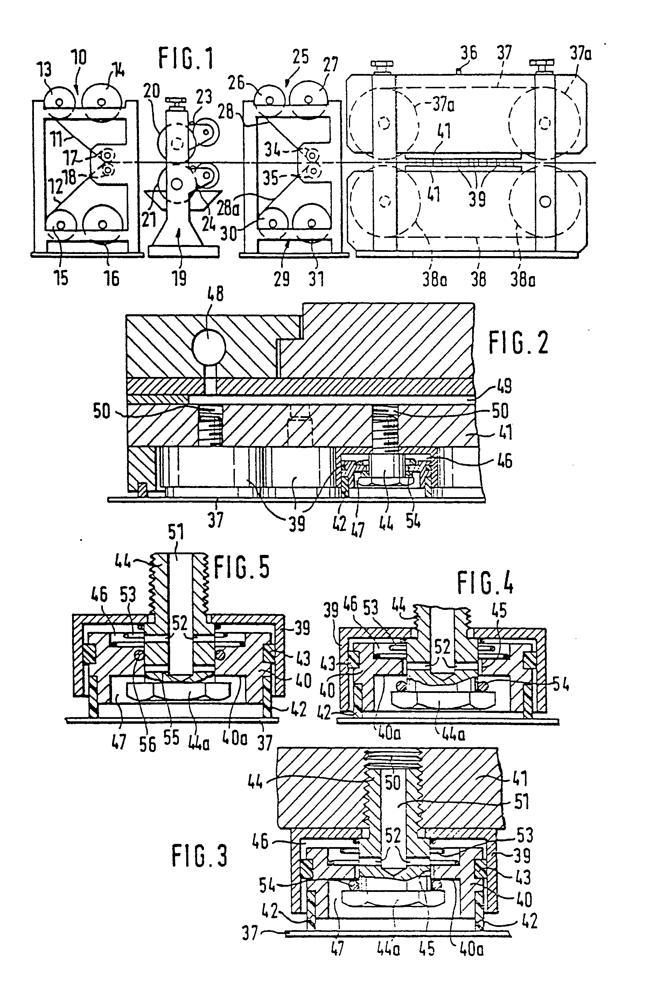

Die äußere Fassung 39 und die innere Fassung 40 sind konzentrisch zueinander angeordnet (vgl. Fig. 3, 4). Auf jedem Preßand 37, 38 liegt eine ringförmige Dichtung 42 auf, die von der inneren Fassung 40 gehalten ist. Gemäß Fig. 3 der Zeichnung ist die Dichtung 42 in eine Ausnehmung der inneren Fassung 40 eingesetzt. Ein elastischer Dichtungsring 43 überbrückt den Abstand zwischen der inneren Fassung 40 und der diese umgebenden äußeren Fassung 39. Die innere Fassung 40 mit der ringförmigen Dichtung 42 kann sich somit reibungslos gegenüber der äußeren Fassung 39 geringfügig bewegen.

Gemäß Fig. 3 der Zeichnung ist zwischen einem Halteteil 44 mit abgestuftem Kopf 44a und der inneren Fassung 40 ein Ringraum 45 freigelassen, der die innere Druckkammer 46 und die äußere Druckkammer 47 miteinander verbindet. Druckmittel kann über Kanäle 48 und 49 zu den Gewindebohrungen 50 der Druckplatte 41 und von dort durch eine zentrale Bohrung 51 des Halteteils 44 über radiale Bohrungen 52 des Halteteils 44 in die innere Druckkammer 46 einströmen. Von dort kann das Druckmittel über den Ringraum 45 in die äußere Druckkammer 47 gelangen und dadurch dort das Preßband 37 an das Werkstück andrücken.

Der Druck in der inneren Druckkammer 46 bewirkt ein Andrücken der inneren Fassung 40 mit der ringförmigen Dichtung 42 an das Preßband 37. Die Anpreßkraft hängt von dem Druck und der von dem Druck beaufschlagten, zum Preßband 37 parallelen Fläche der inneren Fassung 40 innerhalb der inneren Druckkammer 46 ab. Dieser Kraft wirkt eine von dem Druck in der äußeren Druckkammer 47 und der von diesem Druck beaufschlagten Fläche der inneren Fassung 40 abhängige Kraft entgegen. Der Druck in der äußeren Druckkammer 47 bewirkt ein Andrücken des Preßbandes 37 an das Werkstück.

Wenn während des Betriebes aus der äußeren Druckkammer 47 Druckmittel durch einen Spalt zwischen der Dichtung 42 und dem Preßband 37 entweicht, so kann Druckmittel aus der inneren Druckkammer 46 durch den Ringraum 45 mit einer gewissen Drosselwirkung nachströmen. Der Luftdruck in der äußeren Druckkammer 47 ist dan etwas kleiner als der Druck in der inneren Druckkamer 46. Wenn also bei der Arbeit ein unerwünschtes Entweichen von Druckmittel aus der äußeren Druckkammer 47 auftritt, vergrößert sich aufgrund der Drosselwirkung des Ringraumes 45 die Druckdifferenz zwischen der inneren Druckkammer 46 und der äußeren Druckkammer 47, so daß die aus den Druckkräften der inneren Druckkamer 46 und der äußeren Druckkammer 47 resultierende, die innere Fassung 40 mit der Dichtung 42 senkrecht auf das Preßband 37 drückende Kraft größer wird.

Damit in jedem Fall die Kraft, mit welcher die innere Fassung 40 zum Preßband 37 hingedrückt wird, größer ist, als die Kraft, mit welcher diese Fassung 40 vom Preßband 37 weggedrückt wird, ist in die innere Druckkammer 46 eine Schraubendruckfeder 53 eingesetzt, die sich mit einem Ende an der äußeren Fassung 39 und mit dem anderen Ende an der inneren Fassung 40 abstützt. Gemäß Fig. 3 der Zeichnung ist diese Schraubendruckfeder 53 konisch ausgeführt; sie kann auch zylindrisch sein.

Da aber oftmals die Drosselwirkung durch den Ringraum 45 nicht ausreicht und Druckmittel unerwünscht entweicht, ist erfindungsgemäß zwischen dem abgestuften Kopf 44a und der preßbandseitigen Fläche 40a der inneren Fassung 40 eine zusätzliche Absperrvorrichtung in Form eines O-förmigen, vorzugsweise elastischen Dichtringes 54 eingeschaltet, der bei einer Annäherung der preßbandseitigen Fläche 40a gegenüber dem abgestuften Kopf 44a den Ringraum 45 verschließt, so daß die Druckwirkung aus der inneren Druckkammer 46 auf die innere Fassung 40 sich erhöht (vgl. Fig. 3).

Eine derartige einfache Absperrvorrichtung gestattet es, daß die Zuführung der Druckmittels aus der inneren Druckkammer 46 in die äußere Druckkammer 47 durch das durchlaufende Werkstück und zwar dessen äußeren Konturen unmittelbar gesteuert wird.

Läuft ein Werkstück ein, so drückt est mit seinen Kanten gegen das Preßband 37 und hebt dieses auf einer Fläche, welche der Oberfläche des durchlaufenden Werkstückes entspricht, an. Damit werden alle inneren Fassungen 40 der im Bereich der Kanten und der Oberfläche des durchlaufenden Werkstückes liegenden kleinen Druckvorrichtungen (Druckkammern) angehoben, so daß sich der Abstand zwischen der preßbandseitigen Fläche 40a und dem abgestuften, feststehenden Kopf 44a vergrößert und damit der Ringraum 45 zwischen innerer und äußerer Druckkammer 46, 47 sich öffnet (Fig. 4). Damit drückt Druckmittel, das in die äußere Druckkamer 47 jetzt einströmt, das Preßband 37 gegen das durchlaufende Werkstück. Nach dem Durchlauf geben die rückseitigen Kanten des Werkstückes die innere Fassung 40 frei, so daß diese sich absenkt und der Ringraum 45 wieder durch den elastischen Dichtring 54 verschlossen wird. Die äußere Druckkammer 47 wird drucklos und damit auch das Preßband 37, das nicht in den Freiraum (ohne Wertück) gedrückt wird. Druckmittel kann dann auch nicht in nachteiliger Weise entweichen.

Bei einer abgeänderten Ausführungsform gemäß Fig. 5 zeigt das Halteteil 44 neben den Bohrungen 52 für die Zuführung des Druckmittels in die innere Druckkamer 46 weitere Bohrungen 55, die sich öffen und schließen, je nach der Höheneinstellung der inneren Fassung 40, die in ihrer Lage von dem durchlaufenden Werkstück unmittelbar gesteuert wird.

Läuft ein Werkstück ein, so hebt sich durch die Werkstückkante die innere Fassung 40 und gibt die unteren Bohrungen 55 frei, so daß Druckmittel ebenfalls in die äußere Druckkammer 47 strömen kann und dort ebenfalls, wie bei dem Ausführungsbeispiel gemäß Fig. 4 das Preßband 37 gegen das durchlaufende Werkstück drückt. Mit dem Durchlauf der hinteren Kante des Werkstückes senkt sich die innere Fassung 40 ab und verschließt damit die Bohrungen 55. Dazu kann die innere Fassung 40 das Halteteil 44 mit Pass-Sitz umfassen. Sofern ein geringer Spalt zwischen der Außenwandung des Halteteils 44 und der inneren Fassung 40 sich in der Praxis nicht beseitigen läßt, ist es zweckmäßig und bevorzugt, einen Dichtungsring 56 in diesen Spalt einzulegen, um damit ein unbeabsichtigtes Einströmen von Druckmittel aus der inneren Druckkamer 46 in die äußere Druckkammer 47 zu vermeiden.

**Patentansprüche**

1. Aminoplastharzbeschichtete Trägerbahn, dadurch gekennzeichnet, daß deren Oberfläche mit einer streichfähigen Aminoplastharzdispersion mit einer scheinbaren Viskosität von 10000 bis 14000 mPa·s im Scherbereich von 16,5 bis 1,5 sec$^{-1}$, bestehend aus 70—90 Gew.% eines festen, modifizierten Melamin-Formaldehyd-Harzes mit einem Melamin:— Formaldehyd-Molverhältnis von 1:1,5 bis 1:2,2 und einer Wasserverdünnbarkeit von 1:0,8 bis 1:1,5 und 30—10 Gew.% einer flüssigen Phase, beharzt ist.

2. Aminoplastharzbeschichtete Trägerbahn gemäß Anspruch 1, dadurch gekennzeichnet, daß deren Oberfläche mit einer streichfähigen Melamin-Formaldehyd-Harzdispersion mit einer scheinbaren Viskosität von 10000 bis 14000 mPa·s im Scherbereich von 16,5 bis 1,5 sec$^{-1}$, bestehend aus 70—90 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 30—10 Gew.% einer im wesentlichen wäßrigen Phase, beharzt ist.

3. Aminoplastharzbeschichtete Trägerbahn gemäß Anspruch 1, dadurch gekennzeichnet, daß deren Oberfläche mit einer streichfähigen Melamin-Formaldehyd-Harzdispersion mit einer scheinbaren Viskosität von 10000 bis 14000 mPa·s im Scherbereich von 16,5 bis 1,5 sec$^{-1}$, bestehend aus 35—65 Gew.% eines festen, modifizierten Melamin-Formaldehyd-Harzes mit einem Melamin:Formaldehyd-Molverhältnis von 1:1,5 bis 1:,2 und einer Wasserverdünnbarkeit von 1:0,8 bis 1:1,5 und 65—35 Gew.% eines entsprechenden wäßrigen Flüssigharzes, beharzt ist.

4. Streichfähige Aminoplastharzdispersion mit einer scheinbaren Viskosität von 10000 bis 14000 mPa·s im Scherbereich von 16,5 bis 1,5 sec$^{-1}$, bestehend aus 70—90 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 30—10 Gew.% einer flüssigen Phase.

5. Streichfähige Melamin-Formaldehyd-Harzdispersion mit einer scheinbaren Viskosität von 10000 bis 14000 mPa·s im Scherbereich von 16,5 bis 1,5 sec$^{-1}$, bestehend aus 70—90 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 30—10 Gew.% einer im wesentlichen wäßrigen Phase.

6. Streichfähige Melamin-Formaldehyd-Harzdispersion mit einer scheinbaren Viskosität von 10000 bis 14000 mPa·s im Scherbereich von 16,5 bis 1,5 sec$^{-1}$, bestehend aus 35—65 Gew.% eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 und 65—35 Gew.% eines entsprechenden wäßrigen Flüssigharzes.

7. Verfahren zur Herstellung einer aminoplastharzbeschichteten Trägerbahn gemäß den Ansprüchen 1 bis 3, dadurch gekennzeichnet, daß die streichfähige Aminoplastharzdispersion der Ansprüche 4 bis 6 mit an sich bekannten Mitteln oberflächlich auf das Trägermaterial aufgetragen wird.

8. Verfahren zur Herstellung einer streichfähigen Aminoplastharzdispersion gemäß den Ansprüchen 4 bis 6, dadurch gekennzeichnet, daß man zur Herstellung von 100 Gewichtsteilen der Dispersion 70—90 Gewichtsteile eines festen, modifizierten Melamin-Formaldehyd-Harzes mit einem Melamin:Formaldehyd-Molverhältnis von 1:1,5 bis 1:2,2 und einer Wasserverdünnbarkeit von 1:0,8 bis 1:1,5 mit 30—10 Gewichtsteilen einer im wesentlichen wäßrigen Flüssigkeit oder 35—65 Gewichtsteile eines festen, modifizierten Melamin-Formaldehyd-Harzes mit einem Melamin: Formaldehyd-Molverhältnis von 1:1,5 bis 1:2,2 und einer Wasserverdünnbarkeit von 1:0,8 bis 1:1,5 mit 65 bis Gewichtsteilen eines entsprechenden Flüssigharzes in an sich bekannten Weise homogenisiert.

9. Verfahren zur Herstellung von Laminaten, insbesondere beschichteten Holzwerkstoffen und Schichtpreßstoffen durch Beharzen von vlies- oder gewebeartigen Trägerbahnen mit Aminoplastharzen und anschließendes Aufpressen der beharzten Bahnen auf den zu beschichtenden Werkstoff, insbesondere Holzwerkstoff, oder gemeinsames Verpressen mehrerer beharzter Trägerbahnen, insbesondere Dekor- und Kernbahnen, zu Schichtpreßstoffen oder Finish-Folien unter Einwirkung von erhöhter Temperatur, dadurch gekennzeichnet, daß als beharzte Trägerbahnen solche der Patentansprüche 1 bis 3 eingesetzt werden und daß diese im wesentlichen ohne Zwischentrocknung auf das Basismaterial aufgepreßt werden.

10. Verfahren nach Anspruch 9, dadurch gekennzeichnet, daß das Pressen in Kurztakt- oder Doppelbandpressen erfolgt.

**Revendications**

1. Bande support revêtue d'une résine aminoplaste, band caractérisée en ce que sa surface est enduite d'une dispersion de résine aminoplaste, apte à être étalée, d'un viscosité apparente de 10.000 à 14.000 mPa.s dans l'intervalle de cisaillement de 16,5 à 1,5 sec$^{-1}$ constituée de 70 à 90% en poids d'une résine mélamineformaldéhyde modifiée solide dont le rapport molaire mélamine/formaldéhyde est compris entre 1:1,5 et 1:2,2 et dont la diluabilité à l'eau est comprise entre 1:0,8 et 1:1,5, et de 30 à 10% en poids d'une phase liquide.

2. Bande support revêtue d'une résine aminoplaste, selon la revendication 1, band caractérisée en ce que sa surface est enduite d'une dispersion de résine mélamine-formaldéhyde apte à être étalée, d'une viscosité apparente de 10.000 à 14.000 mPa.s dans l'intervalle de cisaillement de 16,5 à 1,5 sec$^{-1}$ qui est constituée de 70 à 90% en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,8 et 1:1,5, et de 30 à 10% en poids d'une phase essentiellement aqueuse.

3. Bande support revêtue d'une résine aminoplaste, selon la revendication caractérisée en ce que sa surface est enduite d'une dispersion de résine melamine-formaldèhyde apte à être étalée, d'une viscosité apparente de 10.000 à 14.000 mPa.s dans l'intervalle de cisaillement de 16,5 à 14.000 mPa·s dans l'intervalle de cisaillement de 16,5 à 1,5 sec$^{-1}$ qui est constituée de 35 à 65% en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,8 et 1:1,5, et de 65 à 35% en poids d'une résine liquide aqueuse correspondante.

4. Dispersion de résine aminoplaste apte à être étalée, d'un viscosité apparente de 10.000 à 14.000 mPa.s dans l'intervalle de cisaillement de 16,5 à 1,5 sec$^{-1}$, dispersion qui est constituée de 70 à 90% en poids d'une résine mélamine-formaldéhdye modifiée solide dont le rapport molaire mélamine/formaldéhyde est comprise entre 1:1,5 et 1:2,2 et dont la diluabilité à l'eau est comprise entre 1:0,8 et 1:1,5, et de 30 à 10% en poids d'une phase liquide.

5. Dispersion de résine mélamine-formaldéhyde apte à être étalée, d'une viscosité apparente de 10.000 à 14.000 mPa.s dans l'intervalle de cisaillement de 16,5 à 1,5 sec$^{-1}$, qui est constituée de 70 à 90% en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,8 et 1:1,5 et de 30 à 10% en poids d'une phase essentiellement aqueuse.

6. Dispersion de résine mélamine-formaldéhyde apte à être étalée, d'une viscosité apparente de 10.000 à 14.000 mPa.s dans l'intervalle de cisaillement de 16,5 à 1,5 sec$^{-1}$, dispersion constituée de 35 à 65% en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,8 et 1:1,5, et de 65 à 35% en poids d'une résine liquide aqueuse correspondante.

7. Procédé de fabrication d'une bande support revêtue d'une résine aminoplaste selon l'une quelconque des revendications 1 à 3, procédé caractérisé en ce qu'on applique superficillement sur la matière support, par des moyens connus, une dispersion de résine aminoplaste apte à être étalée selon l'une quelconque des revendications 4 à 6.

8. Procédé de préparation d'une dispersion de résine aminoplaste apte à être étalée selon l'une quelconque des revendications 4 à 6, procédé caractérisé en ce que, pour préparer 100 parties en poids de la dispersion, on homogénéise, de manière connue, de 70 à 90 parties en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,08 et 1:1,5, avec de 30 à 10 parties en poids d'un liquide essentiellement aqueux, ou de 35 à 65 parties en poids d'une résine mélamine-formaldéhyde modifiée solide dont le rapport molaire mélamine/formaldéhyde est compris entre 1:1,5 et 1:2,2 et dont la diluabilité à l'eau est comprise entre 1:0,8 et 1:1,5 avec de 65 à 35 parties en poids d'une résine liquide correspondante.

9. Procédé de fabrication de stratifiés, plus particulièrement de matériaux dérivés du bois revêtus et de stratifiés, par application de résine aminoplastes sur des bandes supports du genre non tissé ou du genre tissu, puis compression des bandes ainsi enduites sur le matériau à revêtir, qui est plus particulièrement un matériau dérivé du bois, ou par compression en commun de plusieurs bandes supports enduites de résine, plus particulièrement des bandes décors et des bandes internes, de manière à obtenir des stratifiés ou des feuilles de finition, sous l'action d'une température élevée, procédé caractérisé en ce qu'on utilise, comme bandes supports enduites de résine, des bandes conformes à l'une quelconque des revendications 1 à 3, et en ce qu'on presse celles-ci, pratiquement sans séchage intermédiaire, sur la matière de base.

10. Procédé selon la revendication 9 caractérisé en ce que le pressage est effectué dans des presses à cycle court ou dans des presses à double bande.

## Claims

1. Carrier web coated with aminoplast resin, characterised in that its surface is resinated with a brushable aminoplast resin dispersion with an apparent viscosity of 10,000 to 14,000 mPa·s in the shear range of 16.5 to 1.5 sec$^{-1}$, consisting to 70—90% by weight of a solid modified melamine-formaldehyde resin having a melamine:formaldehyde molar ratio of 1:1.5 to 1:2.2 and a dilutability with water of 1:0.8 to 1:1.5 and to 30—10% by weight of a liquid phase.

2. Carrier web coated with aminoplast resin, characterised in that its surface is resinated with a brushable aminoplast resin dispersion with an apparent viscosity of 10,000 to 14,000 mPa·s in the shear range of 16.5 to 1.5 sec$^{-1}$, consisting to 70—90% by weight of a solid modified melamine-formaldehyde resin having a melamine:formaldehyde molar ratio of 1:1.5 to 1:2.2 and a dilutability with water of 1:0.8 to 1:1.5 and to 30—10% by weight of an essentially aqueous phase.

3. Carrier web coated with aminoplast resin, characterised in that its surface is resinated with a brushable melamine-formaldehyde resin dispersion with an apparent viscosity of 10,000 to 14,000 mPa·s in the shear range of 16.5 to 1.5 sec$^{-1}$, consisting to 35—65% by weight of a solid modified melamine-formaldehyde resin having a melamine:formaldehyde molar ratio of 1:1.5 to 1:2.2 and a dilutability with water of 1:0.8 to 1:1.5 and to 65—35% by weight of a corresponding aqueous liquid resin.

4. Brushable aminoplast resin dispersion with an apparent viscosity of 10,000 to 14,000 mPa·s in the shear range of 16.5 to 1.5 sec$^{-1}$, consisting to 70—90% by weight of a solid modified melamine-formaldehyde resin having a melamine-formaldehyde molar ratio of 1:1.5 to 1:2.2 and a dilutability with water of 1:0.8 to 1:1.5 and to 30—10% by weight of an aqueous phase.

5. Brushable resin dispersion with an apparent viscosity of 10,000 to 14,000 mPa·s in the shear range of 16.5 to 1.5 sec$^{-1}$, consisting to 70—90% by weight of a solid modified melamine-formaldehyde resin having a melamine:formaldehyde molar ratio of 1:1.5 to 1:2.2 and a dilutability with water of 1:0.8 to 1:1.5 and to 30—10% by weight of an essentially aqueous phase.

6. Brushable melamine-formaldehyde resin dispersion with an apparent viscosity fo 10,000 to 14,000 mPa·s in the shear range of 16.5 to 1.5 sec$^{-1}$, consisting to 35—65% by weight of a solid modified melamine-formaldehyde resin having a melamine-formaldehyde molar ratio of 1:1.5 to 1:2.2 and a dilutability with water of 1:0.8 to 1:1.5 and to 65—35% by weight of a corresponding aqueous liquid resin.

7. Process for preparing a carrier web coated with aminoplast resin according to Claims 1 to 3, characterised in that the brushable aminoplast resin dispersion of Claims 4 to 6 is applied with known means to the surface of the carrier material.

8. Process for preparing a brushable aminoplast resin dispersion according to Claims 4 to 6, characterised in that to prepare 100 parts by weight of the dispersion 70—90 parts by weight of solid modified melamine-formaldehydr resin having a melamine:formaldehyde molar ratio of 1:1.5 to 1:2.2 and a dilutability with water of 1:0.8 to 1:1.5 are homogenised in a known manner with 30—10 parts by weight of an essentially aqueous liquid or 35—65 parts by weight of solid modified melamine-formaldehyde resin having a melamine:formaldehyde molar ratio of 1:1.5 to 1:2.2 and a dilutability with water of 1:0.8 to 1:1.5 with 65 to 35 parts by weight of a corresponding liquid resin.

9. Process for preparing laminations, in particular coated wooden materials and moulded laminates, by resinating fleece- or fabric-like carrier webs with aminoplast resins and subsequently pressing the resinated webs onto the material to be coated, in particular wooden material, or jointly compression-moulding several resinated carrier webs, in particular decorative and core webs, into moulded laminates or finish films under the influence of elevated temperature, characterised in that the resinated carrier webs used are those of Claims 1 to 3 and that these are pressed onto the basic material essentially without intermediate drying.

10. Process according to Claim 9, characterised in that pressing is effected in short-cycle or twin-belt presses.

EP 0 088 978 B2

FIG.1

FIG.2

FIG.5

FIG.4

FIG.3